# EUROPÄISCHE PATENTANMELDUNG

(11) **EP 0 726 128 A2**
(43) Veröffentlichungstag der Anmeldung: **14.08.1996**
(21) Anmeldenummer: 96101172.3
(22) Anmeldetag: 29.01.1996
(51) Int. Cl.: B29C 33/62

(54) **Verfahren zur Herstellung von Kunststoff-Formteilen und eine Formtrennmittel-Zubereitung**

(30) Priorität: 09.02.1995 DE 19504263
(71) Anmelder: BAYER AG, 51368 Leverkusen (DE)
(72) Erfinder: Wagner, Joachim, Dr., D-51061 Köln (DE); Rasshofer, Werner, Dr., D-51061 Köln (DE)

(57) **Zusammenfassung**

Ein Verfahren zur Herstellung von Kunststoff-Formteilen in geschlossenen Formen unter Verwendung von Metallwerkzeugen, deren Innenwände zumindest teilweise mit einem Formtrennmittel beschichtet sind, wobei als Formtrennmittel organische Verbindungen verwendet werden, die pro Molekül im statistischen Mittel
A) 0,5 bis 1,2 polare Gruppen, vorzugsweise Isocyanatgruppen und
B) mindestens eine unpolare Kohlenwasserstoffkette mit mindestens 12 Kohlenstoffatomen
aufweisen, sowie eine derartige Formtrennmittel aufweisende Formtrennmittel-Zubereitung.

## Beschreibung

Die Erfindung betrifft ein Verfahren zur Herstellung von Kunststoff-Formteilen, insbesondere von Formteilen aus gegebenenfalls geschäumten, gegebenenfalls Harnstoff- und/oder gegehenenfalls Isocyanuratgruppen aufweisenden Polyurethankunststoffen in geschlossenen Metallwerkzeugen, deren Innenwände zumindest teilweise mit einem speziellen Formtrennmittel beschichtet sind, sowie eine hierzu geeignete Formtrennmittel-Zubereitung.

Bei der Herstellung von Kunststoff-Formteilen, insbesondere bei der Herstellung von gegebenenfalls geschäumten Formkörpern auf Basis von gegebenenfalls Harnstoff- und/oder gegebenenfalls Isocyanuratgruppen aufweisenden Polyurethanen durch Umsetzung von zu solchen Kunststoffen ausreagierenden Reaktionsgemischen in geschlossenen Metallwerkzeugen werden in der Regel sogenannte externe Formtrennmittel zur zumindest teilweisen Beschichtung der Innenwände der verwendeten Metallwerkzeuge eingesetzt. Dies bedeutet, daß vor dem Eintrag des reaktionsfähigen Gemisches die Form mit einem Bezug aus einem Trennmittel versehen wird. Dieser Überzug soll den haftenden Kontakt zwischen dem reagierenden Werkstoffgemisch und dem Metall des Metallwerkzeugs verhindern. Solche Trennmittel des Standes der Technik sind ausschließlich Verbindungen wie Fette, Seifen, Wachse, Silikone und andere lipophile Verbindungen (vgl. z.B. Becker/Braun, Kunststoffhandbuch, Band 7, "Polyurethane", Carl Hanser Verlag, München/Wien (1983). Trennmittel des Standes der Technik enthalten keine Gruppen, die mit Metalloberflächen bindend wechselwirken können. Dies ist aus der herrschenden Meinung verständlich, die möglichst wenig Haftung zur Metalloberfläche vorsieht.

Die bekannten Trennmittel des Standes der Technik sind mit dem Nachteil behaftet, daß sie in der Regel an den metallischen Forminnenwänden nicht haften und oftmals eine höhere Affinität gegenüber dem Kunststoff als gegenüber dem Metall aufweisen. Die Folge hiervon ist, daß die Formtrennmittel-Innenbeschichtung des Metallwerkzeugs nur Wenige Reaktionszyklen überlebt und von dem flüssigen Kunststoff bzw. dem flüssigen, zum Kunststoff ausreagierenden Reaktionsgemisch schon nach wenigen Reaktionszyklen ausgewaschen wird und erneuert werden muß.

Es war daher die der Erfindung zugrundeliegende Aufgabe ein neues Formtrennmittel zur Verfügung zu stellen, welches bezüglich seiner Trennwirkung den bekannten Formtrennmitteln des Standes der Technik zumindest ebenbürtig ist, jedoch an den metallischen Forminnenwänden ausreichend stark haftet, um ein "Auswaschen" der Forminnenbeschichtung durch den flüssigen Kunststoff bzw. das flüssige zum Kunststoff ausreagierende Reaktionsgemisch zu verhindern. Ein derartiges Formtrennmittel würde dann wesentlich mehr Reaktionszyklen überleben und müßte viel weniger häufig erneuert werden als die genannten Formtrennmittel des Standes der Technik.

Diese Aufgabe konnte mit der Bereitstellung der nachstehend näher beschriebenen Formtrennmittel bzw. des nachstehend näher beschriebenen Verfahrens zur Herstellung von Kunststoff-Formteilen gelöst werden.

Gegenstand der Erfindung ist ein Verfahren zur Herstellung von Kunststoff-Formteilen in geschlossenen Formen unter Verwendung von Metallwerkzeugen, deren Innenwände zumindest teilweise mit einem Formtrennmittel beschichtet sind, dadurch gekennzeichnet, daß man als Formtrennmittel organische Verbindungen verwendet, die pro Molekül im statistischen Mittel
A) 0,5 bis 1,2 polare Gruppe ausgewählt aus der Gruppe bestehend aus -CN, -NC, -NCO, -CNO, -OCN, -SCN und -NCS und
B) mindestens eine, gegebenenfalls zumindest teilweise fluorierte und/oder gegebenenfalls durch Heteroatome und zusätzlich gegebenenfalls durch Carbonylgruppen unterbrochene, unpolare Kohlenwasserstoffkette mit mindestens 12 Kohlenstoffatomen aufweisen.

Gegenstand der Erfindung ist auch eine Formtrennmittel-Zubereitung für die Innenbeschichtung von metallischen Formwerkzeugen, bestehend aus einer 0,1 bis 100 gew.-%igen Lösung einer organischen Verbindung oder eines Gemischs organischer Verbindungen in einem gegenüber Isocyanatgruppen inerten Lösungsmittel, dadurch gekennzeichnet, daß die gelöste organische Verbindung bzw. das Gemisch der gelösten organischen Verbindungen im statistischen Mittel
A) 0,5 bis 1,2 eine Isocyanatgruppe und
B) mindestens eine, gegebenenfalls zumindest teilweise fluorierte und/oder gegebenenfalls durch Heteroatome und zusätzlich gegebenenfalls durch Carbonylgruppen unterbrochene, unpolare Kohlenwasserstoffkette mit mindestens 12 Kohlenstoffatomen
aufweist.

Bei den erfindungsgemäßen Formtrennmitteln handelt es sich um organische Verbindungen oder um Gemische von organischen Verbindungen, die im statistischen Mittel pro Molekül
A) 0,5 bis 1,2, vorzugsweise 0,9 bis 1,1 und vorzugsweise eine polare, metallophil wirkende Gruppe der bereits obengenannten Art, vorzugsweise Isocyanatgruppe und
B) mindestens eine unpolare, lipophil wirkende Gruppe
aufweisen.

Bei den unpolaren Gruppen B) handelt es sich um gegebenenfalls zumindest teilweise fluorierte, gegebenenfalls durch Heteroatome und gegebenenfalls zusätzlich durch Carbonylgruppen unterbrochene Kohlenwasserstoffreste mit mindestens 12, vorzugsweise mindestens bis 14 und insbesondere 16 bis 32 Kohlenstoffatomen, insbesondere um gegebenenfalls ungesättigte Alkyl-, Aralkyl-, Alkaryl- oder Arylgruppen, die dieser Definition entsprechen. Bei den, die Kohlenwasserstoffreste gegebenenfalls unterbrechenden Heteroatomen handelt es sich beispielsweise um Ethersauerstoff oder um Sauerstoff- bzw. Stickstoffatome, wie sie in Urethan-, Harnstoff-, Allophanat-, Isocyanurat- oder Uretdiongruppen vorliegen. Derartige, Heteroatome oder Carbonylgruppen in der Kette aufweisende erfindungsgemäße Trennmittel entstehen dann, wenn zu ihrer Herstellung gegebenenfalls Ethergruppen aufweisende Alkohole mit gegebenenfalls modifizierten Polyisocyanaten der nachstehend beispielshaft genannten Art umgesetzt werden. Die gemachten Angaben bezüglich der Anzahl der Kohlenstoffatome der Kohlenstoffwasserteste schließen Kohlenstoffatome, die mit Sauerstoff durch eine Doppelbindung verknüpft sind, nicht ein. Im Sinne dieser Definition weist beispielsweise das als erfindungsgemäßes Formtrennmittel geeignete, Urethangruppen aufweisende Monoisocyanat aus n-Dodecanol und Hexamethylendiisocyanat im Mol-Verhältnis 1:1 einen "durch Heteroatome und eine Carbonylgruppe unterbrochenen" Kohlenwasserstoffrest mit 18 Kohlenwasserstoffatomen auf.

Als erfindungsgemäße Formtrennmittel geeignet sind beispielsweise n-Dodecylisocyanat, Isononylphenylisocyanate oder insbesondere Urethan- oder Harnstoffgruppen aufweisende Umsetzungsprodukte von organischen Polyisocyanaten mit gegebenenfalls zumindest teilweise fluorierten Fettalkoholen und/oder Fettaminen mit mindestens 12, vorzugsweise mindestens 14 Kohlenstoffatomen, wobei die Mengenverhältnisse der Ausgangskomponenten bei dieser Umsetzung so gewählt werden, daß die Umsetzungsprodukte bezüglich ihrer mittleren NCO-Funktionalität den oben gemachten Bedingungen entsprechen. Auch einwertige hydrophobe Polyetheralkohole, wie sie beispielsweise durch Umsetzung von einwertigen Startermolekülen mit Propylenoxid oder mit Tetrahydrofuran zugänglich sind können als Reaktionspartner für die organischen Polyisocyanate eingesetzt werden. Auf diese Weise entstehen Ethergruppen aufweisende erfindungsgemäße Formtrennmittel.

Zur Herstellung der genannten Umsetzungsprodukte geeignete Polyisocyanate sind insbesondere solche des Molekulargewichtsbereichs 168 bis 300, insbesondere diesen Ausführungen entsprechende Diisocyanate mit aromatisch und/oder (cyclo)aliphatisch gebundenen Isocyanatgruppen wie beispielsweise 2,4-Diisocyanatotoluol, dessen technische Gemische mit 2,6-Diisocyanatotoluol, 4,4'-Diisocyanatodicyclomethan, dessen technische Gemische mit 2,4'-Diisocyanatotoluol, 1,6-Diisocyanatohexan, 1,12-Diisocyanatododecan, 1,3-Diisocyanatocyclobutan, 1,3- und 1,4-Diisocyanato-cyclohexan sowie beliebige Gemische dieser Isomeren, 1-Isocyanato-3,3,5-trimethyl-5-isocyanatomethyl-cyclohexan (IPDI), 2,4- und/oder 4,4'-Diisocyanatodicyclohexylmethan oder beliebige Gemische derartiger einfacher (cyclo)aliphatischer Diisocyanate. Ebenfalls geeignet sind durch Urethan-, Allophanat-, Isocyanurat-, Harnstoff-, Biuret- und/oder Uretdiongruppen modifizierte Polyisocyanate auf Basis der beispielhaft genannten (cyclo)aliphatischen Diisocyanate oder auf Basis von deren Gemischen, Gemische von unmodifizierten Diisocyanaten mit den genannten modifizierten Polyisocyanaten können ebenfalls zur Herstellung der genannten Umsetzungsprodukte eingesetzt werden.

Grundsätzlich ist es auch möglich, als innere Formtrennmittel solche zu verwenden, die als polare Gruppen anstelle von Isocyanatgruppen andere metallophile polare Gruppen der bereits vorstehend genannten Art aufweisen und ansonsten den hier genannten Voraussetzungen genügen.

Das erfindungsgemäße Verfahren ist für die Herstellung von beliebigen Kunststoff-Formteilen geeignet, bei deren Herstellung geschlossene Metallwerkzeuge verwendet werden, die zwecks besserer Entformbarkeit der Kunststoffe kunststoffseitig zumindest teilweise mit einem inneren Formtrennmittel beschichtet werden. Dies bedeutet, daß das erfindungsgemäße Verfahren beispielsweise zur Herstellung von Kunststoff-Formteilen auf Basis beliebiger, an sich bekannter, in Metallformen zu verformenden, vorab hergestellten thermoplastischen Kunststoffen geeignet ist.

Bevorzugt eignet sich das erfindungsgemäße Verfahren jedoch zur Herstellung von gegebenenfalls geschäumten Formteilen auf Basis von gegebenenfalls Harnstoffgruppen und/oder gegebenenfalls Isocyanuratgruppen aufweisenden Polyurethankunststoffen durch Umsetzung eines entsprechenden, gegebenenfalls schäumfähigen, zu einem derartigen Kunststoff ausreagierenden Reaktionsgemisch in geschlossenen metallischen Formen. Diese an sich bekannten Polyisocyanat-Polyadditionsprodukte werden in an sich bekannter Weise aus Ausgangskomponenten der nachstehend unter a) bis d) beispielhaft genannten Art und gegebenenfalls unter Mitverwendung der nachstehend unter e) genannten Hilfs- und Zusatzmittel hergestellt.

Als Polyisocyanatkomponente a) sind sowohl aromatische als auch (cyclo)aliphatische Polyisocyanate geeignet. Aromatische Polyisocyanate sind jedoch bevorzugt.

Geeignete aromatische Polyisocyanate a) sind insbesondere die in EP-B 0 081 701, Kolonne 3, Zeile 30 bis Kolonne 4, Zeile 25 genannten Verbindungen, wobei die dort als bevorzugt herausgestellten Polyisocyanate, insbesondere die bekannten, gegebenenfalls chemisch modifizierten Polyisocyanate oder Polyisocyanatgemische der Diphenylmethan-Reihe auch im Rahmen der vorliegenden Erfindung bevorzugt sind.

Geeignete (cyclo)aliphatische Polyisocyanate a) sind beliebige organische Diisocyanate eines über 137, vorzugsweise bei 168 bis 300 liegenden Molekulargewichts mit ausschließlich (cyclo)aliphatisch gebundenen Isocyanatgruppen wie beispielsweise 1,6-Diisocyanatohexan, 1,12-Diisocyanatododecan, 1,3-Diisocyanato-cyclobutan, 1,3- und 1,4-Diisocyanato-cyclohexan, sowie beliebige Gemische dieser Isomeren, 1-Isocyanato-3,3,5-trimethyl-5-isocyanatomethyl-cyclohexan (IPDI), 2,4- und/oder 4,4'-Diisocyanatodicyclohexylmethan oder beliebige Gemische derartiger einfacher (cyclo)aliphatischer Polyisocyanate. Ebenfalls geeignet sind durch Urethan-, Allophanat-, Isocyanurat-, Harnstoff-, Biuret- und/oder Uretdiongruppen modifizierte Polyisocyanate auf Basis der beispielhaft genannten (cyclo)aliphatischen Diisocyanate oder auf Basis von deren Gemischen. Gemische von unmodifizierten Diisocyanaten mit den genannten modifizierten Polyisocyanaten können ebenfalls als Komponente a) verwendet werden.

Bei der als weitere Aufbaukomponente vorzugsweise mitzuverwendenden Komponente b) handelt es sich um an sich bekannte Verbindungen mit gegenüber Isocyanatgruppen reaktionsfähigen Gruppen des Molekulargewichtsbereichs 1.800 bis 12.000, vorzugsweise 3.000 bis 7.000 oder um Gemische derartiger Verbindungen, wobei die Komponente b) im Sinne der Isocyanat-Additionsreaktion eine (mittlere) Funktionalität von 2 bis 6, vorzugsweise 2,5 bis 4 und besonders bevorzugt 2,6 bis 3,0 aufweist. Zur Herstellung von gegebenenfalls mikrozellularen Formteilen des Dichtebereichs 0,8 bis 1,4 g/cm³ aus Harnstoffmodifizierten Polyurethanen besonders gut als Komponente b) geeignete Verbindungen sind beispielsweise Polyetherpolyole bzw. Gemische von Polyetherpolyolen wie sie in DE-AS 2 622 951, Kolonne 6, Zeile 65 bis Kolonne 7, Zeile 47, offenbart sind, wobei auch erfindungsgemäß solche Polyetherpolyole bevorzugt sind, deren Hydroxylgruppen zumindest zu 50 %, vorzugsweise zumindest zu 80 % aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b) geeignet, sofern sie den oben gemachten Ausführungen entsprechen, jedoch gegenüber den Polyetherpolyolen weniger bevorzugt.

Als Ausgangskomponente b) ebenfalls gut geeignet sind, obigen Ausführungen entsprechende, Aminopolyether oder Gemische von Aminopolyethern, d.h. Polyether mit gegenüber Isocyanatgruppen reaktionsfähigen Gruppen, die sich zumindest zu 50 Äquivalent-%, vorzugsweise zumindest zu 80 Äquivalent-%, aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-0 081 701, Kolonne 4, Zeile 26 bis Kolonne 5, Zeile 40, genannten Verbindungen.

Ebenfalls als Ausgangskomponente b) geeignet, jedoch weniger bevorzugt, sind Aminogruppen aufweisende Polyester des obengenannten Molekulargewichtsbereichs.

Als Komponente b) können selbstverständlich auch beliebige Gemische der beispielhaft genannten Polyhydroxylverbindungen mit den beispielhaft genannten Aminopolyethern verwendet werden.

Bei der gegebenenfalls mitzuverwendenden Komponente c) handelt es sich um aromatische Diamine der in EP-B-0 081 701, Kolonne 5, Zeile 58 bis Kolonne 6, Zeile 34, beispielhaft genannten Art, wobei auch erfindungsgemäß die dort als bevorzugt herausgestellten Diamine bevorzugt sind.

Bei den gegebenenfalls als weitere Aufbaukomponenten d) mitzuverwendenden Polyolen oder Polyaminen handelt es sich um beliebige nicht-aromatische Verbindungen mit mindestens zwei gegenüber Isocyanatgruppen reaktionsfähigen Gruppen des Molekulargewichtsbereichs 60 bis 1799, vorzugsweise 62 bis 500, insbesondere 62 bis 400. In Betracht kommen beispielsweise mehrwertige Alkohole wie sie in EP-B-0 081 701, Kolonne 9, Zeilen 32 bis 50, offenbart sind. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs. In Betracht kommen auch cycloaliphatische Ringe aufweisende Polyole wie beispielsweise 1,4-Dihydroxy-cyclohexan oder 1,4-Bis-hydroxymethyl-cyclohexan und Polyamine wie beispielsweise 1,4-Cyclohexandiamin, Isophorondiamin, Bis-(4-aminocyclohexyl)-methan, Bis-(3-methyl-4-aminocyclohexyl)-methan.

Bei den bei der Herstellung der Polyisocyanat-Polyadditionsprodukte gegebenenfalls mitzuverwendenden Hilfs- und Zusatzmitteln e) handelt es sich beispielsweise um innere Formtrennmittel, Katalysatoren für die Polyisocyanat-Polyadditionsreaktion, Treibmittel wie Wasser oder Pentan, oberflächenaktive Zusatzstoffe, Zellregler, Pigmente, Farbstoffe, UV-Stabilisatoren, Weichmacher oder fungistatisch bzw. bakteriostatisch wirkende Substanzen, wie sie beispielsweise in EP-B-0 081 701, Kolonne 6, Zeile 40 bis Kolonne 9, Zeile 31, beispielhaft beschrieben sind. Zu den bevorzugten, gegebenenfalls mitzuverwendenden Hilfs- und Zusatzstoffen gehören die an sich bekannten Füll- und/oder Verstärkungsstoffe wie beispielsweise Bariumsulfat, Kieselgur, Schlämmkreide, Mica oder insbesondere Glasfasern, LC-Fasern, Glasflakes, Glaskugeln, Aramid- oder Kohlefasern, wobei diese Füll- und/oder Verstärkungsstoffe in Mengen von bis zu 80 Gew.-%, vorzugsweise bis zu 30 Gew.-%, bezogen auf das Gesamtgewicht der gefüllten bzw. verstärkten Polyisocyanat-Polyadditionsprodukte mitverwendet werden können.

Das erfindungsgemäße Verfahren eignet sich sowohl zur Herstellung von geschäumten als auch zur Herstellung von mikrozellularen als auch zur Herstellung von massiven Formteilen aus gegebenenfalls Harnstoff-modifizierten Polyurethanen einer weichen, halbharten oder harten Konsistenz. Die Eigenschaften der letztendlich erhaltenen Formteile können in an sich bekannter Weise durch Variation der Art und Mengenverhältnisse der eingesetzten Ausgangsmaterialien und durch geeignete Wahl der Art der mitverwendeten Hilfsmittel (z.B. Treibmittel) eingestellt werden.

Die Herstellung der Polyisocyanat-Polyadditionsprodukte erfolgt vorzugsweise nach dem Einstufen-Verfahren dergestalt, daß man die Polyisocyanatkomponente a) mit einem Gemisch der Komponenten b) bis e) unter Verwendung geeignetere Mischapparaturen vermischt und zur Reaktion bringt. Grundsätzlich ist es auch möglich, die Polyisocyanat-Polyadditionsprodukte nach einem modifizierten Einstufenverfahren umzusetzen, gemäß welchem man die Polyisocyanat-Komponente a) mit einem Teil der Komponente b) und gegebenenfalls der Komponente d) unter Bildung von NCO-Semiprepolymeren umsetzt, welche anschließend einstufig mit dem Gemisch der restlichen Komponenten zur Reaktion gebracht werden. Auch die Herstellung der Elastomeren nach dem klassischen Prepolymerverfahren ist prinzipiell denkbar. In allen Fällen liegt die NCO-Kennzahl (Anzahl der NCO-Gruppen dividiert durch die Anzahl an NCO-reaktiven Gruppen, multipliziert mit 100) bei über 60, bevorzugt bei 60 bis 140, vorzugsweise bei 80 bis 120, insbesondere 95 bis 115.

Grundsätzlich möglich ist jedoch auch ein an sich bekanntes Arbeiten bei wesentlich über 140 liegenden NCO-Kennzahlen, falls gleichzeitig an sich bekannte Trimerisierungskatalysatoren für organische Polyisocyanate mitverwendet werden. In einem solchen Falle resultieren Isocyanuratgruppen aufweisende Polyurethankunststoffe der an sich bekannten Art.

Die zu den Polyisocyanat-Polyadditionsprodukten, insbesondere den genannten Polyurethanen führende Umsetzung und die Formgebung erfolgt in geschlossenen Metallformen. Bei diesen Metallwerkzeugen handelt es sich insbesondere um solche aus Stahl, jedoch können auch Metallwerkzeuge aus Aluminium, Zink oder beliebigen Metallegierungen zur Anwendung gelangen.

Der erfindungswesentliche Punkt besteht darin, daß die Innenwände der Metallform zumindest teilweise, vorzugsweise vollständig, vor dem Befüllen der Form mit einem erfindungsgemäßen Trennmittel beschichtet werden. Hierzu werden die erfindungsgemäßen Trennmittel, insbesondere die bevorzugten, Isocyanatgruppen aufweisenden erfindungsgemäßen Trennmittel vorzugsweise in Form einer erfindungsgemäßen Trennmittel-Zubereitung, d.h. in Form einer 0,1 bis 100, vorzugsweise 1,0 bis 50 gew.-%igen Lösung in einem geeigneten gegenüber Isocyanatgruppen inerten Lösungsmittel zur Anwendung gebracht. Die Bezeichnung "100 gew.-%igen Lösung" soll hierbei bedeuten, daß es auch möglich ist, die erfindungswesentlichen Formtrennmittel, falls es sich bei Raumtemperatur um flüssige Substanzen handelt, lösungsmittelfrei zu verwenden. Geeignete Lösungsmittel sind beispielsweise Ester wie Ethylacetat, Isobutylacetat, Methoxypropylacetat, Ketone wie Aceton, Methylethyketon, Methylisobutylketon, Kohlenwasserstoffe wie Cyclohexan, n-Hexan, Spezialbenzine, Toluol oder beliebige Gemische derartiger Lösungsmittel.

Der Auftrag erfolgt mit üblichen Maßnahmen wie Streichen oder Sprühen, vorzugsweise unter Anwendung an sich bekannter Sprühpistolen, insbesondere unter Verwendung von Airless-Pistolen. Falls erfindungsgemäße Trennmittel zur Anwendung gelangen, die keine Isocyanatgruppen und keine mit Wasser reaktiven polaren Gruppen A) enthalten, können solche Trennmittel auch in Form von wäßrigen Zubereitungen, beispielsweise in Form von wäßrigen Emulsionen zur Anwendung kommen. Die zu einer lang anhaltenden Trennwirkung (viele Reaktionszyklen ohne erneutes Beschichten der Forminnenwände) erforderliche Menge des aufzutragenden Formtrennmittels kann in einem Vorversuch ermittelt werden. Die Metallwerkzeuge werden im allgemeinen vor der Beschichtung der Innenwände mit dem erfindungsgemäßen Trennmittel sorgfältig gereinigt. Die Werkzeuge sind nach Auftrocknen der aufgetragenen Trennmittel-Zubereitung einsatzbereit. Erfindungsgemäß vorbehandelte Formwerkzeuge zeichnen sich gegenüber analogen Formwerkzeugen, die mit den bekannten Formtrennmitteln des Standes der Technik vorbehandelt worden sind insbesondere durch eine länger andauernde Trennwirkung (Erhöhung der Anzahl der Reaktionszyklen ohne erneute Vorbehandlung mit Trennmittel) aus.

Die Umsetzung und Formgebung erfolgt in geschlossenen Formen.

## Patentansprüche

1. Verfahren zur Herstellung von Kunststoff-Formteilen in geschlossenen Formen unter Verwendung von Metallwerkzeugen, deren Innenwände zumindest teilweise mit einem Formtrennmittel beschichtet sind, dadurch gekennzeichnet, daß man als Formtrennmittel organische Verbindungen verwendet, die pro Molekül im statistischen Mittel
A) 0,5 bis 1,2 polare Gruppe ausgewählt aus der Gruppe bestehend aus -CN, -NC, -NCO, -CNO, -OCN, -SCN und -NCS und
B) mindestens eine, gegebenenfalls zumindest teilweise fluorierte und/oder gegebenenfalls durch Heteroatome und zusätzlich gegebenenfalls durch Carbonylgruppen unterbrochene, unpolare Kohlenwasserstoffkette mit mindestens 12 Kohlenstoffatomen aufweisen.

2. Verfahren gemäß Anspruch 1, dadurch gekennzeichnet, daß man als Trennmittel solche verwendet, die als polare Gruppe A) eine Isocyanatgruppe und als unpolare Gruppen B) Kohlenwasserstoffreste, ausgewählt aus der Gruppe bestehend aus Alkyl-, Alkaryl-, Aralkyl- und Arylgruppen enthalten.

3. Verfahren gemäß Anspruch 1 und 2, dadurch gekennzeichnet, daß die Trennmittel Umsetzungsprodukte von organischen Polyisocyanaten des Molekulargewichtsbereichs 168 bis 300 mit unterschüssigen Mengen an im Sinne der Isocyanat-Additionsreaktion monofunktionellen Fettalkoholen und/oder Fettaminen darstellen.

4. Verfahren gemäß Anspruch 1 bis 3, dadurch gekennzeichnet, daß die Trennmittel im statistischen Mittel pro Molekül 0,5 bis 1,2 Isocyanatgruppen aufweisen.

5. Verfahren gemäß Anspruch 1 bis 4 zur Herstellung von gegebenenfalls Harnstoff- und/oder Isocyanuratgruppen aufweisenden, gegebenenfalls geschäumten Polyurethanformkörpern.

6. Formtrennmittel-Zubereitung für die Innenbeschichtung von metallischen Formwerkzeugen, bestehend aus einer 0,1 bis 100 gew.-%igen Lösung einer organischen Verbindung oder eines Gemischs organischer Verbindungen in einem gegenüber Isocyanatgruppen inerten Lösungsmittel, dadurch gekennzeichnet, daß die gelöste organische Verbindung bzw. das Gemisch der gelösten organischen Verbindungen im statistischen Mittel
A) 0,5 bis 1,2 Isocyanatgruppen und
B) mindestens eine, gegebenenfalls zumindest teilweise fluorierte und/oder gegebenenfalls durch Heteroatome und zusätzlich gegebenenfalls durch Carbonylgruppen unterbrochene, unpolare Kohlenwasserstoffkette mit mindestens 12 Kohlenstoffatomen
aufweist.
